# EUROPÄISCHE PATENTSCHRIFT

(11) **EP 1 446 362 B1**
(45) Veröffentlichungstag und Bekanntmachung des Hinweises auf die Patenterteilung: **30.03.2005**
(21) Anmeldenummer: 02787379.3
(22) Anmeldetag: 18.11.2002
(51) Int. Cl.: C03C 1/00, C03C 6/00, C03B 5/00, C03C 3/089, C03C 3/091

(54) **HERSTELLUNG EINES BORSILIKATGLASES MIT EINER ZUR MODIFIZIERUNG GEEIGNETEN OBERFLÄCHE, SOWIE DAS MIT DEM ERFINDUNGSGEMÄSSEN VERFAHREN ERHALTENE GLAS UND DESSEN VERWENDUNG**
METHOD FOR THE PRODUCTION OF BOROSILICATE GLASS WITH A SURFACE SUITABLE FOR MODIFICATION, GLASS OBTAINED ACCORDING TO SAID METHOD AND THE USE THEREOF
PROCEDE DE PRODUCTION D'UN VERRE AU BOROSILICATE PRESENTANT UNE SURFACE APPROPRIEE POUR UNE MODIFICATION, VERRE OBTENU SELON CE PROCEDE ET UTILISATION DUDIT VERRE

(30) Priorität: 19.11.2001 DE 10156713
(43) Veröffentlichungstag der Anmeldung: 18.08.2004
(73) Patentinhaber: SCHOTT AG, 55122 Mainz (DE)
(72) Erfinder: LAUTENSCHLÄGER, Gerhard, 07743 Jena (DE); KLOSS, Thomas, 07751 Jena-Cospeda (DE); VON FINTEL, Sandra, 07743 Jena (DE); SCHNEIDER, Klaus, 99510 Apolda (DE)
(74) Vertreter: Fritzsche, Thomas M., Dr.
(86) Internationale Anmeldenummer: PCT/DE2002/004253
(87) Internationale Veröffentlichungsnummer: WO 2003/045862

(56) Entgegenhaltungen:
- EP-A- 0 779 252
- WO-A-99/40038
- US-A- 5 374 595
- DATABASE WPI Section Ch, Week 200004 Derwent Publications Ltd., London, GB; Class L01, AN 2000-047919 XP002248770 & JP 11 310429 A (ASAHI GLASS CO LTD), 9. November 1999 (1999-11-09)
- DATABASE WPI Section Ch, Week 200004 Derwent Publications Ltd., London, GB; Class L01, AN 2000-047920 XP002248771 & JP 11 310430 A (ASAHI GLASS CO LTD), 9. November 1999 (1999-11-09)

## Beschreibung

Die Erfindung betrifft die Herstellung eines Borsilikatglases, insbesondere eines Borsilikat-Glassubstrats mit einer zur Modifizierung geeigneten Oberfläche, sowie das mit dem erfindungsgemäßen Verfahren erhaltene Glas und dessen Verwendung.

Die Verwendung von Glas als Trägersubstrat für eine Vielzahl von Anwendungen ist an sich bekannt. Dabei wird üblicherweise derart vorgegangen, dass auf die Glasoberfläche eine gewünschte chemische Substanz (Modifizierungsmittel), wie z.B. Biomoleküle, immobilisiert wird. Dies geschieht üblicherweise mittels SiOH-Gruppen, die frei an der Glasoberfläche vorliegen. Um eine ausreichende Zahl bzw. Dichte an Modifizierungsmittel zu erreichen, ist es notwendig die Anzahl der reaktiven SiOH-Gruppen zu erhöhen. Dies ist z.B. durch Behandeln in einem Gasplasma möglich. Eine weitere Methode, die Oberflächenreaktivität von Glas zu erhöhen, besteht in der Behandlung mit Alkalihydroxyden, insbesondere Natriumhydroxyd. Derartig behandelte Glasoberflächen lassen sich dann leicht mit anderen Reagenzien umsetzen, wobei eine beschichtete Glasoberfläche erhalten wird. Auf diese Weise ist es möglich, die Oberflächen von Glas mit einer Vielzahl von Verbindungen kovalent zu verknüpfen um bestimmte Eigenschaften zu erzielen, wie beispielsweise schmutzabweisende Eigenschaften, durch Verknüpfung mit Silanen oder auch die Erzielung bestimmter Reaktionen, z. B. mit Biomolekülen.

Als Biochip werden Vorrichtungen bezeichnet, die ein auf dem festen Trägersubstrat immobilisiertes biologisches oder organisches Material umfassen. Als übliches Trägersubstrat für derartige Chips dienen Siliziumwafer, dünne Glasplatten, Kunststoff- oder Nylonmembranen. Auch Aluminium ist bereits als Trägermaterial verwendet worden. Aufgrund der Oberflächeneigenschaften und der im Vergleich zu den anderen Kunststoffmaterialien geringen Eigenfluoreszenz sowie der Beständigkeit gegenüber chemischen Substanzen und einer Temperaturstabilität wird jedoch üblicherweise Glas bevorzugt. Darüber hinaus ist es alterungsbeständig. Es hat sich allerdings gezeigt, dass auch Glas Nachteile aufweist, wie z.B. eine Eigenfluoreszenz. Jedoch sind die oben beschriebenen Behandlungsverfahren entweder aufwendig, wie beispielsweise die Plasmabehandlung, oder sie ergeben eine unbefriedigend aktivierte Oberfläche.

Die Erfindung hat daher zum Ziel ein Glas bereit zu stellen, dessen Oberfläche sich zur Modifizierung eignet und damit als Substratbasis bzw. Träger für eine Vielzahl von Anwendungen verwendbar ist, bei denen die Glasoberfläche mit einem Mittel behandelt bzw. beschichtet werden muss. Dabei soll das Glas bzw. die Oberfläche alterungsbeständig sein.

Die Erfindung hat auch zum Ziel ein Verfahren bereit zu stellen, mit dem ein solches Glas auf einfache Weise hoch reproduzierbar erhältlich ist. Schließlich hat die Erfindung zum Ziel, ein derartiges Glas bereit zu stellen, welches bei Verwendung in den üblichen optischen Techniken nur eine minimale Fluoreszenz zeigt.

Dieses Ziel wird mit dem in den Ansprüchen definierten erfindungsgemäßen Verfahren erreicht. Bevorzugte Ausführungsformen sind in den unteren Ansprüchen definiert.

Es wurde nämlich überraschenderweise gefunden, dass sich das der Erfindung zugrunde liegende Ziel dadurch erreichen lässt, indem man in geschmolzenes Borsilikatglas Wasser einträgt. Eine bevorzugte Wasserquelle ist insbesondere Kristallwasser der Ausgangsmaterialien. Besonders bevorzugt wird erfindungsgemäß Borsäure als Quelle für Boroxid verwendet.

Das erfindungsgemäße Verfahren wird vorzugsweise in Gegenwart von gasförmigem Wasser in einer stark wasserhaltigen Atmosphäre durchgeführt. Dabei wird üblicherweise die Schmelze mit der wasserhaltigen Atmosphäre in Kontakt gebracht. Die im erfindungsgemäßen Verfahren eingesetzte wasserhaltige Atmosphäre ist auf vielfältige Weise erzeugbar. Vorzugsweise wird dabei derart vorgegangen, dass man die Glasschmelze in der Wanne mit fossilen Energieträgern beheizt, wobei die Verbrennung anstatt mit Luft durch reinen Sauerstoff bewirkt wird (sog. Oxyfuel-Technik). Prinzipiell ist es erfindungsgemäß jedoch auch möglich, die Schmelze mit anderen technischen Mitteln zu erwärmen und gasförmiges Wasser in die Atmosphäre einzuleiten.

Eine weitere Möglichkeit zur Erhöhung des Wassergehalts in der Schmelze ist beispielsweise in der DE-A 100 43 454 beschrieben. Danach kann der beim Läutern freigesetzte Sauerstoff an mit Wasserstoff oder auch Wasserdampf gespülten Platinröhren in Wasser überführt werden, welches in der Glasschmelze gelöst vorliegt.

In einer weiteren erfindungsgemäß bevorzugten Ausführungsform wird ein Glaskörper lediglich an der Oberfläche in einer wassergashaltigen Atmosphäre aufgeschmolzen. Auch dabei löst sich ausreichend Wasser in der aufgeschmolzenen Glasoberfläche. Erfindungsgemäß wurde überraschenderweise gefunden, dass sich auch auf diese Weise einfach und bequem eine gut modifizierbare Oberfläche erzeugen lässt.

Mit dem erfindungsgemäßen Verfahren ist es möglich Borsilikatglas bereit zu stellen, welches mindestens 30 mMol/Liter Wassermoleküle gelöst enthält. Dabei ist zumindest ein Teil des Wassers im SiO₂-Network chemisch unter Ausbildung von reaktiven SiOH-Gruppen gebunden.

Üblicherweise enthält ein derartig behandeltes Glas jedoch mindestens 35 mMol/Liter, wobei meistens mindestens 40 mMol/Liter Wasser besonders bevorzugt ist. Dies bedeutet, dass die Menge an vorliegenden OH-Gruppen mindestens 60, üblicherweise mindestens 70 und meist mindestens 80 mMoL/Liter betragen. In dem erfindungsgemäßen Verfahren ist es jedoch auch möglich, problemlos eine höhere Konzentration an reaktiven OH-Gruppen zu erzeugen, indem die Wassergasatmosphäre erhöht wird oder mittels der zuvor beschriebenen Verfahren der in der Schmelze vorliegende Sauerstoff an mit Wasserstoff gespülten Platinrohren zu Wasser- bzw. OH-Gruppen umgesetzt wird. Zweckmäßige Obergrenzen für den Wassergehalt betragen 75 mMol/Liter, insbesondere 70 mMol/Liter, wobei 65 mMol/Liter bzw. 60 mMol/Liter besonders bevorzugt sind. Ganz besonders bevorzugt ist der Bereich von 40-60 mMol/Liter.

Auf diese Weise ist es ohne weiteres möglich, Gläser bereit zu stellen, die als Substrat zur Modifizierung bereit stehen, und die üblicherweise mindestens 1.500 reaktive Spots/cm² Oberfläche aufweisen. Üblicherweise enthalten die erfindungsgemäß hergestellten Gläser so viele reaktive, bindungsfähige OH-Gruppen, dass mindestens 3.000, üblicherweise mindestens 4.000 und regelmäßig 5.000 Beschichtungs- bzw. Modifizierungsmoleküle pro Quadratzentimeter auf die Glasoberfläche gebunden werden können. Auch Beschichtungsdichten mit Spots von 7.000 - 8.000, sogar bis zu 10.000 Molekülen pro Quadratzentimeter sind mit den erfindungsgemäßen Gläsern möglich. Derartige dichte Beschichtungen lassen sich problemlos mittels an sich bekannten Drucktechniken auftragen. Eine bevorzugte Technik sind Tintenstrahldrucker.

Erfindungsgemäß ist es bevorzugt, derartige Gläser als Floatglas herzustellen. Auf diese Weise lassen sich Gläser bereitstellen, welche eine hochreaktive Oberfläche aufweisen und die eine Rauheit von oberhalb 10nm, meistens oberhalb von 20 nm aufweisen. Üblicherweise zeigen derartige Gläser eine Oberflächenrauheit von 150 nm. Die hohe Reaktivität der erfindungsgemäßen Gläser ist um so überraschender, da - wie beispielsweise in der WO 99/40038 beschrieben ist - bislang davon ausgegangen wurde, dass derartige Gläser eine Oberflächenrauheit von weniger als 10 nm aufweisen müssen.

Mit dem erfindungsgemäßen Verfahren ist es möglich, bei Borsilikatgläsern eine Erhöhung der Oberflächenreaktivität zu erreichen. Wird dabei wie im Falle des Floatglases auch noch Wasserstoff dem Verfahren zugesetzt, um eine Oxidation der Zinnoberfläche zu vermeiden, dann wird der in der Floatbadatmosphäre herrschende Sauerstoffgehalt noch zusätzlich zu Wasser reduziert. Dadurch wird die Konzentration an Wassergas, welches in das geschmolzene, bzw. in das gefloatete Glas eindringt, weiter erhöht. Eine bevorzugte Floatatmosphäre enthält ein Inertgas, wie z.B. N₂, He, etc. und ein gasförmiges Reduktionsmittel, wie z.B. H₂. Dabei ist Inertgas in einer Menge von 80 - 95 Vol.-% und das Reduktionsgas in einer Menge von 5 - 15 Vol.-% enthalten.

Ein erfindungsgemäß bevorzugtes Glas ist Borsilikatglas. Bevorzugtes Borsilikatglas weist eine Zusammensetzung von 70 - 85 bzw. bis 87 Gew.-% SiO₂, 7 - 15 Gew.-% B₂O₃ , 1,5 - 7 Gew.-% Al₂O₃, 2 - 6 Gew.-% Na₂O und 0 - 3 Gew.-% K₂O auf. Üblicherweise beträgt die Menge an SiO₂ 78 -83 Gew.-%, wobei 79 - 82 Gew.-% bevorzugt ist. Der Gehalt an B₂O₃ beträgt üblicherweise 10 - 14 und vorzugsweise 11 - 13,3 Gew.-%. Der Gehalt an Al₂O₃ liegt üblicherweise zwischen 1,5 und 3 Gew.-% und vorzugsweise zwischen 1,8 und 2,6 Gew.-% und für Na₂O beträgt er üblicherweise 2,8 - 5 Gew.-%, wobei 3 - 4,5 bevorzugt sind. Schließlich liegt der Gehalt an K₂O im erfindungsgemäßen Borsilikatglas 0 -1,5 Gew.-%, wobei 0 - 1,2 Gew.-% besonders bevorzugt sind. In einer besonders bevorzugten Ausführungsform enthält das Glas 80 - 81,5 Gew.-% SiO₂, 12 - 12,9 Gew.-% B₂O₃, 2,1 - 2,4 Gew.-% Al₂O₃, sowie 3,2 -4,1 Gew.-% Na₂O und 0 - 0,95 Gew.-% K₂O. Für das erfindungsgemäß bevorzugte Borsilikatglas hat es sich als zweckmäßig erwiesen, wenn die Summe an Na₂O und K₂O mindestens 2,5 und maximal 8 Gew.-% beträgt. Üblicherweise beträgt die Mindestmenge der beiden Alkalioxyde jedoch mindestens 3 und maximal 5 Gew.-%, wobei mindestens 3,8 und maximal 4,5 Gew.-% bevorzugt ist. Besonders bevorzugt beträgt die Summe der Alkalioxyde mindestens 4 Gew.-% und maximal 4,25 Gew.-%. In derartigen Gläsern ist SiO₂ der Netzwerkbildner.

Das erfindungsgemäße Verfahren ist auch mit Borsilikatgläsern durchführbar, welche Erdalkalioxyde enthalten. Vorzugsweise wird es jedoch an Gläsern durchgeführt, welche keine oder nur geringfügige Mengen, d.h. nur Verunreinigungen, an Erdalkalioxyden umfassen.

Vorzugsweise enthalten die im erfindungsgemäßen Verfahren eingesetzten Borsilikatgläser keine toxisch wirkenden Läuteroxyde der 5. Hauptgruppe mit polyvalentem Ioncharakter, wie z. B. As₂O₃ oder auch Sb₂O₃.

Darüber hinaus hat es sich gezeigt, dass Borsilikatgläser, welche frei von Eisen sind, besonders gute Transmissionseigenschaften aufweisen, welche für eine Vielzahl von Anwendungen mit Glassubstraten, wie Microarrays und Biochips notwendig ist.

Es wurde auch gefunden, dass sich durch Auswahl der entsprechenden Rohmaterialien zur Glasherstellung die Konzentration von Eisen, insbesondere von Fe³⁺-Ionen, wie z. B. dem Fe₂O₃ problemlos auf < 0,015 Gew.-% (150 ppm) verringern lassen. Dadurch wird ein Glas erhalten, welches eine äußerst geringe Eigenfluoreszenz zeigt. Auf diese Weise sind Gläser erhältlich, die im ultravioletten Bereich eine hohe Transparenz, insbesondere im UVB/UVA-Wellenbereich aufweisen. So werden beispielsweise mit gefloateten Standarddicken von nur 0,7 mm - 7 mm bei einer Wellenlänge von 360 nm Transmissionswerte von > 90 % erreicht. Selbst bei Wellenlängen von 300 nm sind noch Transmissionswerte bei Dicken von 0,7 - 1 mm von 70 % erhältlich.

In einer besonders bevorzugten Ausführungsform enthält das erfindungsgemäße Glas eine Konzentration an oktaetrisch gebundenen Fe³⁺-Ionen von < 10 ppm und von Cr³⁺ von < 10 ppm, vorzugsweise < 5 ppm und insbesondere < 2 ppm. Das erfindungsgemäß erhaltene Borsilikatglas zeigt auch eine äußerst niedrige Eigenfluoreszenz und ermöglicht deshalb eine verbesserte Erfassung und fehlerfreie Auswertung von Signalen, welche von Fluoreszenzfarbstoffen abgegeben werden, wie sie heute üblicherweise als Fluoreszenzmarker verwendet werden. Dabei liegt der Arbeitsbereich derartiger Geräte bzw. Marker im Wellenbereich zwischen 488 nm und 633 nm. Das Glas ist fluoreszenzarm, d.h. es weist so eine geringe Eigenfluoreszenz auf, dass es im üblichen Arbeitsbereich keine merkbare bzw. Test störende Eigenfluoreszenz abstrahlt.

Es hat sich erfindungsgemäß auch erwiesen, dass es durch die erfindungsgemäße Vorgehungsweise nicht notwendig ist, Substratgläser bereit zu stellen, die frei von Alkaliionen sind, wie dies beispielsweise in der WO99/40038 beschrieben ist. Es hat sich überraschenderweise gezeigt, dass bei solchen Gläsern, die mit dem erfindungsgemäßen Verfahren hergestellt werden, die dort beschriebene Diffusion von Natriumionen in die funktionellen Schichten nicht erfolgt.

Die erfindungsgemäß hergestellten Gläser zeigen eine hohe chemische Beständigkeit gegenüber Säuren und Laugen, insbesondere Alkalilaugen. Sie sind insbesondere auch langzeitstabil, so dass sie auch nach langer Lagerung noch problemlos mit einer hohen Dot- bzw. Spotdichte beschichtet werden können.

Mit dem erfindungsgemäßen Verfahren, insbesondere bei der Herstellung im Float-Verfahren wird ein Substratglas erhalten, welches sehr plane feuerpolierte Oberflächen aufweist, die eine durchschnittliche Welligkeit im Bereich von 0,08 µm auf der Unterseite und 0,11 µm auf der Oberseite aufweist. Derartig nichtporöse glatte Oberflächen erweisen sich als besonders vorteilhaft für Hybridisierungsverfahren.

Das erfindungsgemäße Verfahren ist auf allen üblichen Borsilikatgläsern anwendbar. Ihre Herstellung ist dem Fachmann bekannt und beispielsweise durch Aufschmelzen eines Gemenges aus Quarzsand (SiO₂), hydratisiertem Natriumtetraborat (Na₂B₄O₇), Kaliumnitrat, Tonerdehydrat und Kochsalz als Läutermittel erhältlich. Eine übliche Zusammensetzung enthält 70 - 87 Gew.-% SiO₂, 7 - 15 Gew.-% B₂O₃, 0 - 8, insbesondere 1 - 8 Gew.-% Al₂O₃, 1 - 8 Gew.-% Na₂O, 0,1 - 8 Gew.-% K₂O, sowie gegebenenfalls 0,1 - 8 Gew.-% weiterer Bestandteile. Gegebenenfalls kann der SiO₂-Gehalt auch bis zu 62 Gew.-% bzw. 64 Gew.-% abgesenkt werden solange das SiO₂ noch als Netzwerkbildner funktioniert. In einzelnen Fällen können auch noch bis zu 6 Gew.-% SnO₂, bis zu 4 Gew.-% TiO₂ sowie geringe Mengen, d.h. bis zu 0,1 Gew.-% Sb₂O₃ vorliegen.

Ein derartiges erfindungsgemäß erhaltenes Glas kann auf an sich bekannte Weise beschichtet werden. Dabei wird üblicherweise derart vorgegangen, dass zuerst die Glasoberfläche gereinigt wird. Dabei werden auch an der Oberfläche vorliegende Salze entfernt. Hierzu sind vielfältige Reinigungsverfahren anwendbar. Die Reinigung umfasst die Behandlung mit alkalischen, sauren und/oder organischen Medien. Eine häufig verwendete Reinigungsart ist die sogenannte Kernsche Reinigung, bei der zuerst mit alkalischen und oxidierenden Lösungen bei erhöhten Temperaturen gespült wird und anschließend mit Wasser bei Raumtemperaturen und mit Säure bei erhöhten Temperaturen nachbehandelt wird (W. Kern und D. A. Puotinen: Cleaning solutions based on hydrogen peroxide for use in silicon semi-conductor technology, RCA Rev. (1970) 187-206). Nach einem anschließenden Spülen mit Wasser wird eine Glasoberfläche erhalten, die zur Immobilisierung der verschiedensten Reagenzien verwendet werden kann. Eine Zusammenfassung derartiger Reinigungsmethoden, beispielsweise von J. J. Cras, C. A. Rowe-Taitt, D. A. Nievens und F. S. Ligler, ist in "Comparison of chemical cleaning methods of glass in preparation for silanization" in Biosensors & Bioelectronics 14 (1999) 683 - 688 beschrieben. Insbesondere nach der Reinigung werden die erfindungsgemäß erhaltenen Gläser mit einer jeweils gewünschten Substanz üblicherweise dadurch beschichtet, dass reaktive bzw. funktionelle Gruppen der Substanz durch chemische Reaktion mit den SiOH-Gruppen des Glases an die Oberfläche kovalent gebunden werden.

Die Erfindung betrifft auch ein Borsilikatglas bzw. Borsilikat-Glassubstrat, wie es mit dem erfindungsgemäßen Verfahren erhalten wird und das zumindest an seiner Oberfläche eine reaktive OH-Gruppendichte von mindestens 30 mMol/Liter aufweist. Vorzugsweise ist es ein planes Glas insbesondere ein Flachglas wie z. B. ein Floatglas.

Die Erfindung betrifft auch die Verwendung derartiger Gläser zur chemisch kovalenten Immobilisierung von reaktiven Substanzen, insbesondere zur Herstellung von Sensoren und Biochips, schmutzfest ausgerüsteten Gläsern, insbesondere Fenstergläsern, wie beispielsweise Duran®, Laborgläsern, Reagenzgläsern, sowie als Microarrays, wie beispielsweise elektronischer Nasen bzw. künstlichen Nasenchips, elektronischen Zungen, Chips zur Polymerase-Kettenreaktion, DNA-Microarraychips bzw. Genchips, Proteinchips, sogenannten biochemischen Labors auf einem Chip. Derartige Chips werden auch in der Diagnose und Analyse von Proben, insbesondere markierten Proben, wie z. B. fluoreszenz-, farb- oder radioisotopmarkierten Proben sowie Gas- und Rauchmeldern verwendet. Auch für Sensoren in der KFZ-Industrie wie Druck-, Kipp- und Schleudersensoren sind die erfindungsgemäß beschichteten Gläser geeignet. Die Erfindung soll an den folgenden Beispielen kurz näher erläutert werden.

### Beispiele

Es wurden durch Zusammenschmelzen der entsprechenden Ausgangsmaterialien Borsilikatgläser erschmolzen, welche der Norm EN 1748-1 entsprechen. Beim Aufschmelzen wurden die Gläser mit Kochsalz geläutert. Anschließend wurde das so geschmolzene Borsilikatglas in einer Float-Anlage zu einem Flachglas gegossen. Auf diese Weise wurden Dünnglassubstrate mit einer Dicke von 0,7 mm, 1,1 mm, 2 mm, 3 mm und 5 mm hergestellt. Durch eine entsprechende Auswahl der Rohmaterialien enthielt das gefloatete Borsilikatglas Fe₂O₃ in einer Menge von < 150 ppm. Auf diese Weise wurden die folgenden Gläser hergestellt.

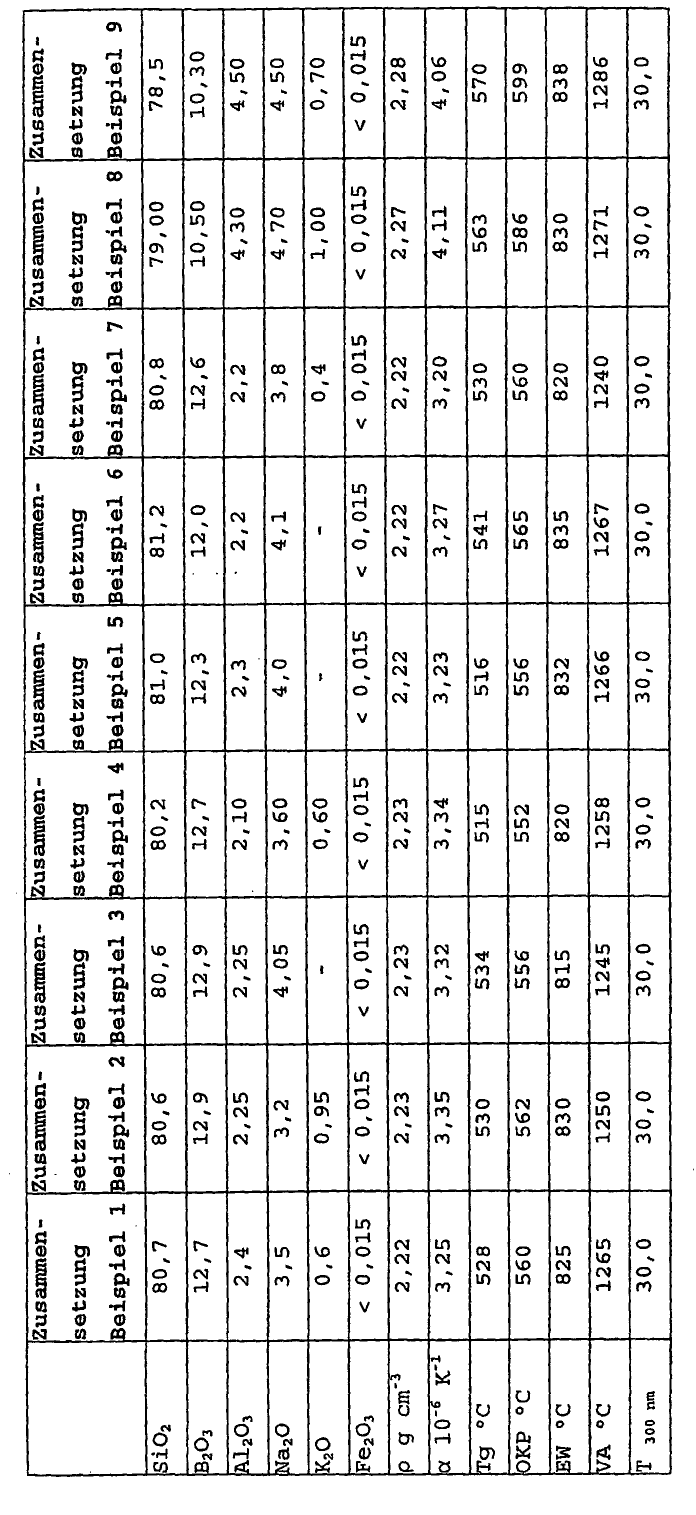

Die so erhaltenen Gläser wurden dann auf ihre Transmissionseigenschaften untersucht. Dabei zeigte sich, dass die derart erhaltenen Gläser im UVB- bzw. UVA-Wellenlängenbereich eine hohe Transparenz aufweisen. Bei einer Wellenlänge von 360 nm werden noch Transmissionswerte von 90 % für die zuvor erwähnten Standardstärken erreicht. Bei einer Wellenlänge von 300 nm erreichen die obigen Gläser noch einen Transmissionswert von > 70 % bei einer Dicke von 1 mm. Darüber hinaus zeigen die erfindungsgemäßen Gläser eine geringe, d.h. kaum merkbare, Solarisation, so dass auch bei starker Bestrahlung bei den üblicherweise verwendeten Wellenlängen durch Solarisation entstandene Strahlenschäden bzw. Fehler in der Lichtdurchlässigkeit vernachlässigt werden können. Darüber hinaus zeigen die erfindungsgemäßen Gläser ein nur geringes Fluoreszenzverhalten.

Vor ihrer Verwendung wird die Oberfläche der erfindungsgemäßen Substratgläser von organischen und anorganischen Verschmutzungen gereinigt. Eine solche Reinigung ist zur Derivatisierung der Oberflächen bevorzugt. Hierzu hat es sich gezeigt, dass die aus der Halbleitertechnik bekannte Kernsche Reinigung für die erfindungsgemäßen Gläser besonders geeignet ist (W. Kern und D. A. Puotinen: Cleaning solutions based on hydrogen peroxide for use in silicon semi-conductor technology, RCA Rev. (1970) 187-206).

## Patentansprüche

1. Verfahren zur Herstellung eines Borsilikatglases mit einer reaktive SiOH-Gruppen aufweisenden leicht modifizierbaren Oberfläche, **dadurch gekennzeichnet, dass** man eine Glasschmelze herstellt und darin Wasser in einer Menge von mindestens 30 mMol Wasser pro Liter Glas löst.

2. Verfahren nach Anspruch 1 **dadurch gekennzeichnet, dass** das Wasser mittels wasserhaltigen Ausgangsmaterialien in die Schmelze eingetragen wird.

3. Verfahren nach einem der vorhergehenden Ansprüche, **dadurch gekennzeichnet, dass** man das Glas zumindest an seiner Oberfläche in einer Atmosphäre aufschmilzt, die gasförmiges Wasser enthält.

4. Verfahren nach einem der vorhergehenden Ansprüche, **dadurch gekennzeichnet, dass** die wassergashaltige Atmosphäre durch Verbrennen von fossilen Energieträgern mit reinem Sauerstoff erzeugt wird.

5. Verfahren nach einem der vorhergehenden Ansprüche **dadurch gekennzeichnet, dass** man es zur Herstellung von Floatglas anwendet.

6. Verfahren nach einem der vorhergehenden Ansprüche **dadurch gekennzeichnet, dass** das Glas 70 - 87 Gew.-% SiO₂, 7 - 15 Gew.-% B₂O₃, 0 -8 Gew.-% Al₂O₃, 0 - 8 Gew.-% Na₂O, 0 - 8 Gew.-% K₂O, sowie gegebenfalls 0 - 8 Gew.-% weitere Bestandteile umfasst.

7. Verfahren nach einem der vorhergehenden Ansprüche **dadurch gekennzeichnet, dass** man das Glas frei von toxischen Läutermitteln herstellt.

8. Verfahren nach einem der vorhergehenden Ansprüche **dadurch gekennzeichnet, dass** es Alkaliionen enthält.

9. Verfahren nach einem der vorhergehenden Ansprüche **dadurch gekennzeichnet, dass** es weniger als 150 ppm Fe₂O₃ und weniger als 5 ppm Cr³⁺ enthält.

10. Verfahren nach einem der Ansprüche 1 - 9 **dadurch gekennzeichnet, dass** die Glasoberfläche mit mindestens einer Substanz durch chemische Reaktion der SiOH-Gruppen mit reaktiven Gruppen der Substanz zumindest teilweise beschichtet wird.

11. Glas erhältlich nach einem der vorherigen Ansprüche 1 - 10.

12. Verwendung des nach einem der Ansprüche 1-10 hergestellten Glases als Substrat zur chemisch kovalenten Immobilisierung von reaktiven Substanzen.

13. Verwendung nach Anspruch 12 zur Herstellung von Sensoren und für Biochips, schmutzfest ausgerüstetes Gebrauchsglas, für Fensterglas, Reagenzglas, Laborglas, Microarrays, elektronische Nasen, künstliche Nasenchips, elektronische Zungen, Chips zur Polymerase-Kettenreaktion, DNA-Microarraychips, Genchips, Proteinchips, sowie biochemische Labors auf einem Chip.

## Claims

1. Process for producing a borosilicate glass with a surface which includes reactive SiOH groups and can easily be modified, **characterized in that** a glass melt is produced, and water is dissolved therein in a quantity of at least 30 mmol of water per litre of glass.

2. Process according to Claim 1, **characterized in that** the water is introduced into the melt by means of water-containing starting materials.

3. Process according to one of the preceding claims, **characterized in that** the glass is partially melted at its surface in an atmosphere which contains gaseous water.

4. Process according to one of the preceding claims, **characterized in that** the atmosphere containing water gas is generated by the combustion of fossil energy carriers with pure oxygen.

5. Process according to one of the preceding claims, **characterized in that** it is used to produce float glass.

6. Process according to one of the preceding claims, **characterized in that** the glass comprises 70 - 87% by weight of SiO₂, 7 - 15% by weight of B₂O₃, 0 - 8% by weight of Al₂O₃, 0 - 8% by weight of Na₂O, 0 - 8% by weight of K₂O and if appropriate 0 - 8% by weight of further constituents.

7. Process according to one of the preceding claims, **characterized in that** the glass is produced without toxic refining agents.

8. Process according to one of the preceding claims, **characterized in that** it contains alkali metal ions.

9. Process according to one of the preceding claims, **characterized in that** it contains less than 150 ppm of Fe₂O₃ and less than 5 ppm of Cr³⁺.

10. Process according to one of Claims 1 - 9, **characterized in that** the glass surface is at least partially coated with at least one substance by chemical reaction of the SiOH groups with reactive groups of the substance.

11. Glass obtainable as described in one of the preceding Claims 1 - 10.

12. Use of the glass produced as described in one of Claims 1 - 10 as substrate for the chemically covalent immobilization of reactive substances.

13. Use according to Claim 12 for the production of sensors and for biochips, service glass which is designed to be dirt-resistant, for window glass, test-tube glass, laboratory glass, micro-arrays, electronic noses, artificial nose chips, electronic tongues, chips for the polymerase chain reaction, DNA micro-array chips, gene chips, protein chips and biochemical laboratories on a chip.

## Revendications

1. Procédé pour la fabrication d'un verre borosilicaté avec une surface facilement modifiable, présentant des groupements SiOH réactifs, **caractérisé en ce qu'**on prépare une masse fondue de verre et on y dissout de l'eau en une quantité d'au moins 30 mmoles d'eau par litre de verre.

2. Procédé selon la revendication 1, **caractérisé en ce que** l'eau est introduite dans la masse fondue au moyen de matériaux de départ contenant de l'eau.

3. Procédé selon l'une quelconque des revendications précédentes, **caractérisé en ce qu'**on fond le verre au moins au niveau de sa surface dans une atmosphère qui contient de l'eau sous forme gazeuse.

4. Procédé selon l'une quelconque des revendications précédentes, **caractérisé en ce que** l'atmosphère contenant de l'eau sous forme gazeuse est produite par combustion de sources fossiles d'énergie avec de l'oxygène pur.

5. Procédé selon l'une quelconque des revendications précédentes, **caractérisé en ce qu'**il est utilisé pour la fabrication de verre flotté.

6. Procédé selon l'une quelconque des revendications précédentes, **caractérisé en ce que** le verre comprend 70 à 87% en poids de SiO₂, 7 à 15% en poids de B₂O₃, 0 à 8% en poids de Al₂O₃, 0 à 8% en poids de Na₂O, 0 à 8% de K₂O, ainsi que le cas échéant 0 à 8% en poids d'autres constituants.

7. Procédé selon l'une quelconque des revendications précédentes, **caractérisé en ce qu'**on fabrique le verre exempt d'agents d'affinage toxiques.

8. Procédé selon l'une quelconque des revendications précédentes, **caractérisé en ce qu'**il contient des ions alcalins.

9. Procédé selon l'une quelconque des revendications précédentes, **caractérisé en ce qu'**il contient moins de 150 ppm de Fe₂O₃ et moins de 5 ppm de Cr³⁺.

10. Procédé selon l'une quelconque des revendications 1 à 9, **caractérisé en ce que** la surface du verre est revêtue au moins partiellement avec au moins une substance par réaction chimique des groupements SiOH avec des groupements réactifs de la substance.

11. Verre pouvant être obtenu selon l'une quelconque des revendications précédentes 1 - 10.

12. Utilisation du verre préparé selon l'une quelconque des revendications 1 à 10 comme substrat pour l'immobilisation chimique par covalence de substances réactives.

13. Utilisation selon la revendication 12 pour la réalisation de sondes et pour les biopuces, le verre utilitaire apprêté de manière résistante aux salissures, pour le verre à vitre, le verre à éprouvette, le verre de laboratoire, les micro-réseaux, les nez électroniques, les puces pour nez artificiel, les langues électroniques, les puces pour la réaction en chaîne par polymérase (PCR), les puces à ADN, les puces géniques, les puces protéiniques ainsi que les laboratoires biochimiques sur une puce.
